# EUROPEAN PATENT APPLICATION

(11) **EP 4 576 406 A1**
(43) Date of publication of application: **25.06.2025**
(21) Application number: 24214382.4
(22) Date of filing: 21.11.2024
(51) Int. Cl.: H01M 50/583

(54) **CURRENT COLLECTION PLATE AND BATTERY CELL**

(30) Priority: 18.12.2023 CN 202323459561 U; 31.07.2024 WO PCT/CN2024/108954
(71) Applicant: Eve Energy Co., Ltd., Huizhou, Guangdong 516006 (CN)
(72) Inventor: LI, Jidong, 516006 Huizhou, Guangdong (CN); FU, Zhibo, 516006 Huizhou, Guangdong (CN); WANG, Xingjian, 516006 Huizhou, Guangdong (CN); SONG, Pengyuan, 516006 Huizhou, Guangdong (CN)
(74) Representative: Berggren Oy

(57) **Abstract**

The present disclosure provides a current collection plate and a battery cell. The current collection plate includes: a main body (10); a conductive part (20) connected to the main body (10) of the current collection plate and including a first side (20a) and a second side (20b) opposite to the first side (20a); and an insulating layer (30) covering at least part of the first side (20a) and at least part of the second side (20b).

## Description

### TECHNICAL FIELD

The present disclosure relates to the technical field of batteries, and in particular, to a current collection plate and a battery cell.

### BACKGROUND

Power battery cells have become an important part of the new energy technology field. The packaging and manufacturing of the power battery cells are important measures to achieve efficient battery production and performance improvement. The current collection plate and a battery tab are fixedly connected through welding, and a conductive handle is leaded out to be connected to a lid. When the battery cell is short-circuited, the conductive handle is easily reconnected after the current collection plate is fused, causing battery failure and corresponding safety issues.

### SUMMARY

Embodiments of the present disclosure provide a current collection plate and a battery cell. The current collection plate is attached with an insulating layer to solve the problem of reconnection after a positive current collection plate is fused.

In a first aspect, embodiments of the present disclosure provide a current collection plate. The current collection plate includes a main body, a conductive part connected to the main body and including a first side and a second side opposite to the first side, and an insulating layer covering at least part of the first side and at least part of the second side.

In a second aspect, embodiments of the present disclosure provide a battery cell. The battery cell includes a current interrupter, a battery core, and the above-mentioned current collection plate connected to the current interrupter and the battery core.

Beneficial effects of the embodiments of the present disclosure:

The current collection plate provided by the present disclosure has at least the following beneficial effects: The current collection plate includes the main body; the conductive part connected to the main body and including the first side and the second side opposite to the first side; and the insulating layer. The insulating layer covers at least part of the first side and the second side. When a battery cell is short-circuited, the conductive part is prone to fracture, and the insulating layer is configured to prevent a fracture portion of the conductive part from being reconnected to ensure a sole current channel, thereby solving the problem of reconnection after a positive current collection plate is fused.

### BRIEF DESCRIPTION OF THE DRAWINGS

In order to more clearly illustrate technical solutions in the embodiments of the present disclosure, the drawings needed to be used in the description of the embodiments will be briefly introduced below. Obviously, the drawings in the following description are only some embodiments of the present disclosure. For those skilled in the art, other drawings may also be obtained based on these drawings without exerting creative efforts.
FIG. 1 is a schematic structural diagram of a current collection plate provided by a preferred embodiment of the present disclosure.
FIG. 2 is a schematic side structural view of a current collection plate provided by a preferred embodiment of the present disclosure.
FIG. 3 is a partial schematic side view of a current collection plate provided by a preferred embodiment of the present disclosure.
FIG. 4A and FIG. 4B are another structural schematic diagram of a current collection plate provided by a preferred embodiment of the present disclosure.
FIG. 5 is a schematic diagram of an insulating layer of a current collection plate provided by a preferred embodiment of the present disclosure.

Reference symbols: 10, main body of current collection plate; 11, central pressure relief hole; 20, conductive part; 20a, first side; 20b, second side; 201, first conductive area; 202, second conductive area; 21, bending part; 30, insulating layer; 301, first sub-insulating layer; 302, second sub-insulating layer.

### DETAILED DESCRIPTION

The technical solutions in the embodiments of the present disclosure will be clearly and completely described below with reference to the accompanying drawings in the embodiments of the present disclosure. Obviously, the described embodiments are only some of the embodiments of the present disclosure, but not all of the embodiments. Based on the embodiments in the present disclosure, all other embodiments obtained by those skilled in the art without making creative efforts belong to the scope of protection of the present disclosure.

In the description of the present disclosure, it should be understood that the orientation or positional relationship indicated by the terms "upper", "lower", etc. is based on the orientation or positional relationship shown in the drawings, and is only for the convenience of describing the present disclosure and simplifying the description. The terms are not intended to indicate or imply that the device or element referred to must have a specific orientation, be constructed and operate in a specific orientation, and therefore should not be construed as a limitation on the present disclosure. In addition, the terms "first" and "second" are used for descriptive purposes only and cannot be understood as indicating or implying relative importance or implicitly indicating the quantity of indicated technical features. Thus, features defined as "first" and "second" may explicitly or implicitly include one or more of the described features. In the description of the present disclosure, "plurality" means two or more than two, unless otherwise expressly and specifically limited.

The present disclosure may repeat reference numbers and/or reference letters in different implementations, such repetition is for the purposes of simplicity and clarity and does not itself indicate a relationship between the various embodiments and/or arrangements discussed.

The current collection plate and the battery cell provided by the present disclosure will be described in detail below with reference to specific embodiments and drawings, and the current collection plate of the present disclosure may be used as a positive current collection plate.

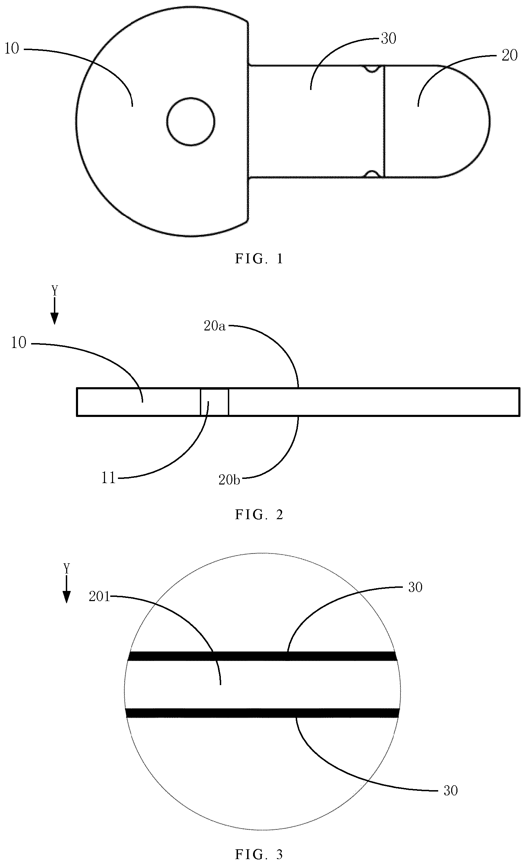

Please refer to FIG. 1, the present disclosure provides a current collection plate including:
a main body 10;
a conductive part 20 connected to the main body 10 of the current collection plate and including a first side 20a and a second side 20b opposite to the first side 20a; and
an insulating layer 30 covering at least part of the first side 20a and at least part of the second side 20b.

Please refer to FIG. 2, exemplarily, the main body 10 of current collection plate is provided with a central pressure relief hole 11 in a thickness direction, and functions of pressure relief and electrolyte injection are realized through the central pressure relief hole 11. A number of the central pressure relief holes 11 is not limited, and the details shall be subject to actual applications.

Specifically, the main body 10 of current collection plate may also be provided with other pressure relief through holes at an edge of the main body 10 of current collection plate along the thickness direction for pressure relief or liquid injection. The details are subject to actual applications and are not specifically limited in the present disclosure.

Specifically, the insulating layer 30 may, for example, cover at least part of the first side 20a and at least part of the second side 20b, and the covered parts have an insulating effect. The insulating layer 30 is configured to prevent the conductive part 20 of the current collection plate from being reconnected after fusing after the battery cell is short-circuited, so as to avoid battery failure. That is, the conductive part 20 is fractured after the battery cell is short-circuited, and the insulating layer 30 is configured to prevent a fracture portion of the conductive part 20 from being reconnected. In addition, the conductive part 20 can be bent, and its part not covered by the insulating layer 30 is bent and welded to a lid.

Referring to FIG. 3, in an optional embodiment of the present disclosure, the insulating layer 30 covers at least part of the first side 20a and the second side 20b.

Specifically, the insulating layer 30 may, for example, cover at least part of upper and lower surfaces of the conductive part 20. That is, the insulating layer 30 may, for example, cover at least part of the first side 20a and the second side 20b of the conductive part 20, and the covered part is an insulated part. After the battery cell is short-circuited, the fracture portion of the conductive part 20 is prone to be reconnected. The insulating layer 30 is provided on the conductive part 20 to prevent the conductive part 20 of the current collection plate from being reconnected after fusing after the battery cell is short-circuited, playing a role of fuse protection, thereby avoiding battery failure and improving the safety performance of the battery cell. Furthermore, the conductive part 20 is a bendable structure, and a portion of the conductive part 20 not covered by the insulating layer 30 is bent and welded to the lid.

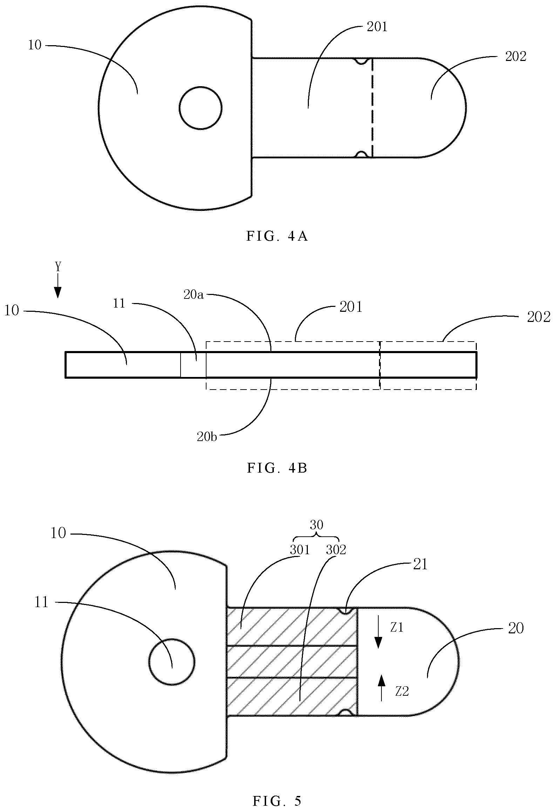

Please refer to FIG. 4A and FIG. 4B, in an optional embodiment of the present disclosure, the conductive part 20 includes a first conductive area 201 and a second conductive area 202 connected to the first conductive area 201. The first conductive area 201 is located between the main body 10 of current collection plate and the second conductive area 202. The insulating layer 30 covers parts of the first side 20a and the second side 20b located in the first conductive area 201.

Specifically, the first conductive area 201 and the second conductive area 202 are integrally connected. Parts of the first side 20a and the second side 20b in the first conductive area 201 are covered by the insulating layer 30 to prevent the conductive part 20 from being reconnected after fusing after the battery cell is short-circuited. The second conductive area 202 is configured for welding with the lid.

In an optional embodiment of the present disclosure, bending parts 21 are provided on opposite sides of the conductive part 20 and formed along a first direction Y At least part of the bending part 21 is located in the first conductive area 201, and the insulating layer 30 covers the part of the bending part 21. The first direction Y is the thickness direction of the conductive part 20, preventing upper and lower parts of the conductive part 20 from contacting after being bent, and making the current path sole.

Specifically, the bending part 21 is located in the first conductive area 201 and the second conductive area 202, that is, one part of the bending part 21 is located in the first conductive area 201 and the other part is located in the second conductive area 202. The bending part 21 facilitates the bending of the current collection plate and ensures a sole fuse position when the battery cell is short-circuited. The bending part 21 may be semicircular and located at an edge of the conductive part 20, but the bending part is not limited to this shape. The conductive part 20 plays a role in ensuring a bending position and fusing protection.

It can be understood that a portion of the bending part 21 located in the first conductive area 201 is covered by the insulating layer 30.

Exemplarily, the bending part 21 may also be in a circular, elliptical, rectangular or other geometric shape and the two bending parts 21 may be arranged in a vertical direction between the first conductive area 201 and the second conductive area 202, so that the conductive part 20 facilitates bending and ensures the sole fuse position, and the insulating layer 30 plays the role in fuse protection.

In an optional embodiment of the present disclosure, bending parts 21 are provided on opposite sides of the conductive part 20 and formed along the first direction Y The bending part 21 is located in the first conductive area 201, and the insulating layer 30 covers the bending part 21. The first direction Y is the thickness direction of the conductive part 20, preventing upper and lower parts of the conductive part 20 from contacting after being bent and the fracture portion from being reconnected after the conductive part 20 is fractured, so that the current channel is sole and power-off protection is realized.

Specifically, the bending part 21 is entirely located in the first conductive area 201 and at the edge of the conductive part 20, and is covered by the insulating layer 30. When the battery cell is short-circuited, the conductive part 20 is prone to fusing, the bending part 21 ensures the fuse position sole, and the insulating layer 30 covers the bending part 21 to prevent the bending part 21 from being reconnected after fusing. The bending part 21 may be, for example, semicircular, rectangular or triangular, but is not limited to this shape, so that the conductive part 20 facilitates bending and ensures the sole fuse position, and the insulating layer 30 plays the role in fuse protection.

Exemplarily, the bending part 21 may also be in a circular, oval, rectangular or other geometric shape and arranged in the vertical direction in a middle of the first conductive area 201, so that the conductive part 20 is easy to bend and ensures the fuse position sole, and the insulating layer 30 is provided on the conductive part 20 to protect against melting.

Exemplarily, a length of the bending part 21 from the main body 10 of the current collection plate may be, for example, 10 mm, and a length of the insulating layer 30 may be, for example, 11 mm, but are not limited thereto, so that the insulating layer 30 can cover the bending part 21. When the battery cell is short-circuited, the bending part 21 ensures the sole fuse position, and the insulating layer 30 plays the role in fuse protection.

Please refer to FIG. 5, in an optional embodiment of the present disclosure, the insulating layer 30 includes a first sub-insulating layer 301 and a second sub-insulating layer 302. Parts of the first sub-insulating layer 301 and the second sub-insulating layer 302 are overlapped in the first conductive area 201, and other parts of the first sub-insulating layer 301 and the second sub-insulating layer 302 are located on the conductive part 20.

Specifically, an area of the first sub-insulating layer 301 is less than an area of the first side 20a and the second side 20b located in the first conductive area 201, and an area of the second sub-insulating layer 302 is also less than the area of the first side 20a and the second side 20b located in the first conductive area 201. That is, the first sub-insulating layer 301 extends in a second direction Z1 to cover part of the conductive part 20, the second sub-insulating layer 302 extends in a third direction Z2 to cover part of the conductive part 20, and the first sub-insulating layer 301 and the second sub-insulating layer 302 partially overlap on a center line of the conductive part 20 perpendicular to the second direction Z1 and the third direction Z2, and the overlapping portion has an overlapping width to ensure that the first sub-insulating layer 301 and the second sub-insulating layer 302 can be firmly connected, preventing the first sub-insulating layer 301 and the second sub-insulating layer 302 from falling off from each other.

Exemplarily, a portion of the first sub-insulating layer 301 not overlapped with the second sub-insulating layer 302 covers the first side 20a and the second side 20b in the first conductive area 201, and a portion of the second sub-insulating layer 302 not overlapped with the first sub-insulating layer 301 covers the first side 20a and the second side 20b in the first conductive area 201.

Exemplarily, the first sub-insulating layer 301 covers entire surfaces of the first side 20a and the second side 20b in the first conductive area 201, and an overlapping portion of the second sub-insulating layer 302 covers on the first sub-insulating layer 301.

Alternatively, the second sub-insulating layer 302 covers the entire surfaces of the first side 20a and the second side 20b in the first conductive area 201, and an overlapping portion of the first sub-insulating layer 301 covers on the second sub-insulating layer 302. Materials of the first sub-insulating layer 301 and the second sub-insulating layer 302 may be the same or different, and positions of the first sub-insulating layer 301 and the second sub-insulating layer 302 may be replaced with each other to ensure that the first sub-insulating layer 301 and the second sub-insulating layer 302 can be firmly connected. The first sub-insulating layer 301 and the second sub-insulating layer 302 play the role of insulation protection.

In an optional embodiment of the present disclosure, the overlapping width is greater than or equal to 1.5 mm, but is not limited thereto.

In an optional embodiment of the present disclosure, a thickness of the insulating layer 30 is greater than or equal to 35 µm, but is not limited thereto.

In an optional embodiment of the present disclosure, the insulating layer 30 is made of an insulating material, such as ceramic or polyimide, but is not limited thereto. Polyethylene terephthalate (PET) and other composite materials with good insulation properties may also be adopted to play the role in power-off protection.

In a second aspect, another optional embodiment of the present disclosure provides a battery cell, including:
a current interrupter;
a battery core; and
the above-mentioned current collection plate connected to the current interrupter and the battery core respectively.

Specifically, the current collection plate may, for example, serve as a positive current collection plate. The battery core includes necessary components making up the battery core, such as a positive tab, a negative tab, a positive piece, a negative piece, a separator, electrolyte, etc. The current collection plate is welded to the tab, and one end of the conductive part 20 of the current collection plate facing away from the main body 10 is connected to the current interrupter.

The current collection plate provided by the present disclosure includes at least the following working processes or principles. The current collection plate includes: the main body; the conductive part connected to the main body of the current collection plate and including the first side and the second side opposite to the first side; and the insulating layer. The insulating layer covers at least part of the first side and the second side. When the battery cell is short-circuited, the insulating layer is configured to prevent the first side from contacting the second side. When the battery cell is short-circuited, the conductive part is prone to fracture, and the bending part is configured to ensure the sole fracture position and the sole current channel. The conductive part is also provided with the insulating layer thereon, and the insulating layer is configured to prevent the fracture portion of the conductive part from being reconnected, solving the problem of reconnection after the positive current collection plate is fused and protecting the battery cell.

In summary, although the present disclosure has been disclosed as above with preferred embodiments, the above preferred embodiments are not intended to limit the present disclosure. Those of ordinary skill in the art can make various modifications without departing from the spirit and scope of the present disclosure. There are various modifications and modifications, so the scope of protection of the present disclosure shall be subject to the scope defined in the claims.

## Claims

1. A current collection plate, **characterized by** comprising:
a main body (10);
a conductive part (20) connected to the main body (10) and comprising a first side (20a) and a second side (20b) opposite to the first side (20a); and
an insulating layer (30) covering at least part of the first side (20a) and at least part of the second side (20b).

2. The current collection plate of claim 1, **characterized in that** the conductive part (20) comprises a first conductive area (201) and a second conductive area (202) connected to the first conductive area (201), the first conductive area (201) is located between the main body (10) and the second conductive area (202), and the insulating layer (30) covers the first side (20a) and the second side (20b) in the first conductive area (201).

3. The current collection plate of claim 2, **characterized in that** bending parts (21) are provided on opposite sides of the conductive part (20) and formed along a first direction, at least part of the bending part (21) is located in the first conductive area (201), the insulating layer (30) covers the part of the bending part (21), and the first direction is a thickness direction of the conductive part (20).

4. The current collection plate of claim 2, **characterized in that** bending parts (21) are provided on opposite sides of the conductive part (20) and formed along a first direction, the bending parts (21) are located in the first conductive area (201), the insulating layer (20) covers the bending parts (21), and the first direction is a thickness direction of the conductive part (20).

5. The current collection plate of claim 3 or claim 4, **characterized in that** the bending parts (21) are disposed at an edge of the conductive part (20), and the bending parts (21) are arranged along a direction perpendicular to an arrangement direction of the first conductive area (201) and the second conductive area (202).

6. The current collection plate of claim 3 or claim 4, **characterized in that** a length of the insulating layer (30) is greater than a length of the bending part (21).

7. The current collection plate of claim 2, **characterized in that** the insulating layer (30) comprises a first sub-insulating layer (301) and a second sub-insulating layer (302), parts of the first sub-insulating layer (301) and the second sub-insulating layer (302) are overlapped in the first conductive area (201), and other parts of the first sub-insulating layer (301) and the second sub-insulating layer (302) are located on the conductive part (20).

8. The current collection plate of claim 7, **characterized in that** an overlapping width of an overlapping portion of the first sub-insulating layer (301) and the second sub-insulating layer (302) is greater than or equal to 1.5 mm.

9. The current collection plate of claim 8, **characterized in that** the overlapping portion of the first sub-insulating layer (301) and the second sub-insulating layer (302) is located in a middle of the first conductive area (201).

10. The current collection plate of claim 7, **characterized in that** an area of the first sub-insulating layer (301) is less than an area of the first side (20a) and the second side (20b) located in the first conductive area (201), and an area of the second sub-insulating layer (302) is less than the area of the first side (20a) and the second side (20b) located in the first conductive area (201).

11. The current collection plate of claim 7, **characterized in that** materials of the first sub-insulating layer (301) and the second sub-insulating layer (302) are different.

12. The current collection plate of any one of claims 1-4 and 7, **characterized in that** the main body (10) of the current collection plate is provided with a central pressure relief hole (11) in a thickness direction.

13. The current collection plate of any one of claims 1-4 and 7, **characterized in that** a thickness of the insulating layer (30) is greater than or equal to 35 µm.

14. The current collection plate of any one of claims 1-4 and 7, **characterized in that** a material of the insulating layer (30) is ceramic or polyimide.

15. A battery cell, **characterized by** comprising:
a current interrupter;
a battery core; and
the current collection plate of any one of claim 1 to claim 14, wherein the current collection plate is connected to the current interrupter and the battery core.
